# EUROPEAN PATENT SPECIFICATION

(11) **EP 4 310 459 B1**
(45) Date of publication and mention of the grant of the patent: **18.02.2026**
(21) Application number: 23185812.7
(22) Date of filing: 17.07.2023
(51) Int. Cl.: G01F 1/692, G01F 15/14, G01F 1/684, G01F 15/00

(54) **THERMAL TYPE FLOWMETER AND MANUFACTURING METHOD OF THERMAL TYPE FLOWMETER**
THERMISCHER DURCHFLUSSMESSER UND HERSTELLUNGSVERFAHREN FÜR THERMISCHEN DURCHFLUSSMESSER
DÉBITMÈTRE THERMIQUE ET PROCÉDÉ DE FABRICATION D'UN DÉBITMÈTRE THERMIQUE

(30) Priority: 21.07.2022 JP 2022116556
(43) Date of publication of application: 24.01.2024
(73) Proprietor: Surpass Industry Co., Ltd., Gyoda-shi Saitama 361-0037 (JP)
(72) Inventor: IMAI, Hiroshi, Saitama, 361-0037 (JP)
(74) Representative: Lippert Stachow Patentanwälte Rechtsanwälte

(56) References cited:
- JP-A- 2010 230 388
- JP-A- 2012 154 748
- JP-A- 2016 011 887
- JP-A- 2019 196 934

## Description

### BACKGROUND

### 1. TECHNICAL FIELD

The present invention relates to a thermal type flowmeter and a manufacturing method of a thermal type flowmeter.

### 2. DESCRIPTION OF RELATED ART

Thermal type flowmeters that control the temperature of a liquid flowing through a channel and measure the flow rate based on a difference in temperatures between the liquid in upstream and the liquid in downstream of a temperature-controlled section are conventionally known (for example, Japanese Patent Application Laid-Open No. 2006-10322).

Japanese Patent Application Laid-Open No. 2006-10322 discloses a thermal type flowmeter. In this thermal type flowmeter, a rectangular groove is formed in one glass substrate, another glass substrate having a heat transfer component and a temperature detection component formed thereon is attached to the groove-formed side of the one glass substrate, and thereby a channel whose liquid contact part is entirely made of glass is formed.

The thermal type flowmeter disclosed in Japanese Patent Application Laid-Open No. 2006-10322 transfers heat to a liquid subjected to measurement from the heat transfer component via the glass substrate, determines the temperatures of the liquid subjected to measurement by the temperature detection components arranged in upstream and downstream of the heat transfer component, and thereby derives the flow rate of the liquid subjected to measurement.

The channel whose liquid contact part is entirely made of glass has a disadvantage of low corrosion resistance against alkaline liquids because of a neutralization reaction between silicon dioxide, which is the main component of glass, and an alkaline liquid. Thus, to measure the flow rate of an alkaline liquid, it is preferable to use a channel formed of a resin material having high corrosion resistance against alkaline liquids. For example, instead of the glass substrate having the groove formed therein as illustrated in Japanese Patent Application Laid-Open No. 2006-10322, it is preferable to use a resin channel member having a groove for flow rate measurement formed therein.

To guide a liquid to the groove formed in the resin channel member, an inflow channel to which a liquid is guided from an inflow port is formed in the channel member and thus connected to one end of the groove. Further, an outflow channel that guides a liquid to an outflow port is formed in the channel member and thus connected to the other end of the groove. Further, when a micro-flow rate (for example, 0.01 mL/min or greater and 30 mL/min or less) is measured by using a straight channel formed in the resin channel member, it is preferable to reduce the width of the groove formed in the resin channel member (for example, 0.2 mm or greater and 1 mm or less).

In reducing the width of the groove for flow rate measurement, however, this requires high machining accuracy that matches the centers of the inflow channel and the outflow channel to the center of the groove in order to form the inflow channel in the channel member by cutting machining so that the inflow channel has the same diameter as the width of the groove and thereby is connected to one end of the groove and form the outflow channel in the channel member by cutting machining so that the outflow channel has the same diameter as the width of the groove and thereby is connected to the other end of the groove, for example.

Without high machining accuracy being achieved, the inflow channel may not be suitably connected to one end of the groove, or the outflow channel may not be suitably connected to the other end of the groove. For example, the connecting part between the inflow channel and the one end of the groove or the connecting part between the other end of the groove and the outflow channel may be excessively narrower than the width of the groove or may have a level difference. In such a case, a pressure loss may occur, or disturbance may occur in a liquid flow, and this will reduce the accuracy of flow rate measurement.
Furthermore, JP 2019-196934 A discloses a microfluid device comprising a flow path which is formed by superposing a flow path formation part for forming a rectangular groove on a surface of a silicon substrate. In the flow path formation part, holes are formed in positions corresponding to both ends of the flow path respectively. Silicon tubes are inserted into the holes respectively. In the silicon tube, a cutout part in which one portion of a peripheral wall concerned is cut out and formed in one place extending over a tip part.

### BRIEF SUMMARY

The present invention has been made in view of such circumstances and intends to provide a thermal type flowmeter and a manufacturing method of a thermal type flowmeter that enable easy formation of a measuring channel, an inflow channel connected to one end of the measuring channel, and an outflow channel connected to the other end of the measuring channel in the channel member and enable accurate measurement of a flow rate while enhancing corrosion resistance against corrosive liquids such as alkaline liquids or acidic liquids.

To solve the above problem, the present invention provides a flowmeter according to claim 1.

According to the thermal type flowmeter of one aspect of the present invention, since the channel member having the first groove formed therein that serves as a measuring channel used for measuring a liquid flow rate is made of a resin, it is possible to enhance corrosion resistance against corrosive liquids. Further, it is possible to measure a liquid flow rate by attaching the plate member to the flat surface of the channel member having the first groove formed therein and detecting heat transferred from the heating resistor of the sensor unit to the liquid via the plate member as the temperature of the plate member determined by the temperature detecting resistor.

Further, each of the first inner diameter of the position of the flat surface at which the inflow channel is opened and the second inner diameter of the position of the flat surface at which the outflow channel is opened is larger than the width of the first groove. Thus, even when the centers of the inflow channel and the outflow channel are slightly shifted from the center of the first groove, the inflow channel is suitably connected to one end of the first groove, or the outflow channel is suitably connected to the other end of the first groove. It is therefore possible to achieve easy formation of the first groove, the inflow channel, and the outflow channel in the channel member and accurate measurement of a flow rate.

In the thermal type flowmeter according to one aspect of the present invention, a preferable configuration is such that each of the first inner diameter and the second inner diameter is 1.5 times or greater of the width of the first groove.

According to the thermal type flowmeter of the present configuration, because each of the first inner diameter and the second inner diameter is 1.5 times or greater of the width of the first groove, the inflow channel can be suitably connected to one end of the first groove, or the outflow channel can be reliably connected to the other end of the first groove, even when the centers of the inflow channel and the outflow channel are slightly shifted from the center of the first groove.

**In** the thermal type flowmeter according to one aspect of the present invention, a preferable configuration is such that the width of the first groove is 0.2 mm or greater and 1 mm or less.

According to the thermal type flowmeter of the present configuration, because the width of the first groove is 0.2 mm or greater and 1 mm or less, the reduced channel sectional area of the measuring channel can facilitate a liquid to be heated by the heating resistor, and measuring accuracy of a liquid flow rate can be increased.

**In** the thermal type flowmeter according to one aspect of the present invention, a preferable configuration is such that the plate member is formed of sapphire or glassy carbon.

According to the thermal type flowmeter of the present configuration, since the plate member is formed of sapphire or glassy carbon, the thermal type flowmeter can achieve sufficient corrosion resistance against corrosive liquids such as alkaline liquids, strong acids (hydrofluoric acid, sulfuric acid, or the like), or the like.

In the thermal type flowmeter according to one aspect of the present invention, a preferable configuration is such that the sensor unit is deposited on the plate member.

According to the thermal type flowmeter of the present configuration, since the sensor unit is deposited on the plate member, the plate member can be directly heated by the heating resistor, and the temperature of the plate member can be directly determined by the temperature detecting resistor.

In the thermal type flowmeter according to one aspect of the present invention, a preferable configuration is such that a second groove annularly extending so as to surround the first groove is formed in the flat surface, and the thermal type flowmeter includes an annular seal member inserted in the second groove and contacted with the plate member to form an annular seal area surrounding the first groove.

According to the thermal type flowmeter of the present configuration, since the annular seal member is inserted in the second groove formed in the flat surface and forms the annular seal area surrounding the first groove, it is possible to reliably prevent a liquid flowing through the measuring channel from leaking out of the seal area.

In the thermal type flowmeter according to one aspect of the present invention, a preferable configuration is such that the sensor unit is arranged at a position closer to the outflow channel than to the inflow channel in the axis direction.

According to the thermal type flowmeter of the present configuration, because the sensor unit is arranged at a position closer to the outflow channel than to the inflow channel, a liquid flowing from the inflow channel into the first groove is able to reach the measuring position of the sensor unit with disturbance or the like of the liquid being sufficiently reduced and the speed thereof being stabilized.

Furthermore, according to the present invention a manufacturing method of a thermal type flowmeter according to claim 8 is provided.

According to the manufacturing method of a thermal type flowmeter of one aspect of the present invention, since the channel member having the first groove formed therein that serves as a measuring channel used for measuring a liquid flow rate is made of a resin, it is possible to enhance corrosion resistance against alkaline liquids. Further, it is possible to measure a liquid flow rate by attaching the plate member to the flat surface of the channel member having the first groove formed therein and detecting heat transferred from the heating resistor of the sensor unit to the liquid via the plate member as the temperature of the plate member determined by the temperature detecting resistor.

Further, each of the first inner diameter of the position of the flat surface at which the inflow channel is opened and the second inner diameter of the position of the flat surface at which the outflow channel is opened is larger than the width of the first groove. Thus, even when the center of the inflow channel is slightly shifted from the center of the first groove when the inflow channel having a circular cross section at one end of the first groove is cut and formed, the inflow channel can be suitably connected to one end of the first groove. Similarly, even when the center of the outflow channel is slightly shifted from the center of the first groove when the outflow channel having a circular cross section at the other end of the first groove is cut and formed, the outflow channel can be suitably connected to the other end of the first groove. It is therefore possible to achieve easily formation of the measuring channel, the inflow channel, and the outflow channel in the channel member and accurate measurement of a flow rate.

According to the present invention, it is possible to provide a thermal type flowmeter and a manufacturing method of a thermal type flowmeter that enable easy formation of a measuring channel, an inflow channel connected to one end of the measuring channel, and an outflow channel connected to the other end of the measuring channel in the channel member and enable accurate measurement of a flow rate while enhancing corrosion resistance against corrosive liquids such as alkaline liquids or acidic liquids.

Especially, the thermal type flowmeter according to the present invention can be manufactured or is manufactured by the manufacturing method according to the present invention. All features of the thermal type flowmeter according to the present invention also are disclosed with respect to the manufacturing method of the thermal flow meter according to the present invention. All features of the manufacturing method of the thermal flow meter according to the present invention also are disclosed with respect to the thermal flow meter according to the present invention and preferably are related to corresponding structural features of the thermal flow meter.

### BRIEF DESCRIPTION OF THE SEVERAL VIEWS OF THE DRAWINGS

Fig. 1 is a partial longitudinal sectional view of a thermal type flowmeter according to one embodiment of the present invention.
Fig. 2 is an exploded view of the thermal type flowmeter illustrated in Fig. 1.
Fig. 3 is a sectional view of the thermal type flowmeter illustrated in Fig. 1.
Fig. 4 is a plan view of the thermal type flowmeter illustrated in Fig. 3.
Fig. 5 is a plan view of a channel unit illustrated in Fig. 4.
Fig. 6 is a partial enlarged view of a part A of a channel member illustrated in Fig. 5.
Fig. 7 is a partial enlarged view of a channel member of a thermal type flowmeter of a comparative example.
Fig. 8 is a sectional view taken along the arrow B-B of the thermal type flowmeter illustrated in Fig. 4.
Fig. 9 is a sectional view taken along the arrow C-C of the thermal type flowmeter illustrated in Fig. 8.
Fig. 10 is a plan view of a sensor unit formed in a temperature detection surface of a plate member.
Fig. 11 is a plan view illustrating a state where a sensor unit formed on a glass substrate is joined to the temperature detection surface of the plate member.
Fig. 12 is a plan view illustrating a state where a first groove and a second groove are formed in a flat surface of the channel member.

### DETAILED DESCRIPTION

A thermal type flowmeter 100 according to one embodiment of the present invention will be described below with reference to the drawings.

The thermal type flowmeter 100 of the present embodiment is a device that heats a liquid flowing through an internal channel, determines the temperature of the heated liquid, and thereby measures the flow rate of the liquid. The thermal type flowmeter 100 of the present embodiment is suitable for measuring a micro-flow rate such as, for example, 0.1 ml/min to 30 ml/min. A liquid subjected to flow rate measurement by the thermal type flowmeter 100 of the present embodiment is a corrosive liquid such as alkaline liquids or acidic liquids. The corrosive liquid is a chemical solution used in a semiconductor manufacturing apparatus, such as ammonia water, hydrofluoric acid, hydrochloric acid, or the like, for example.

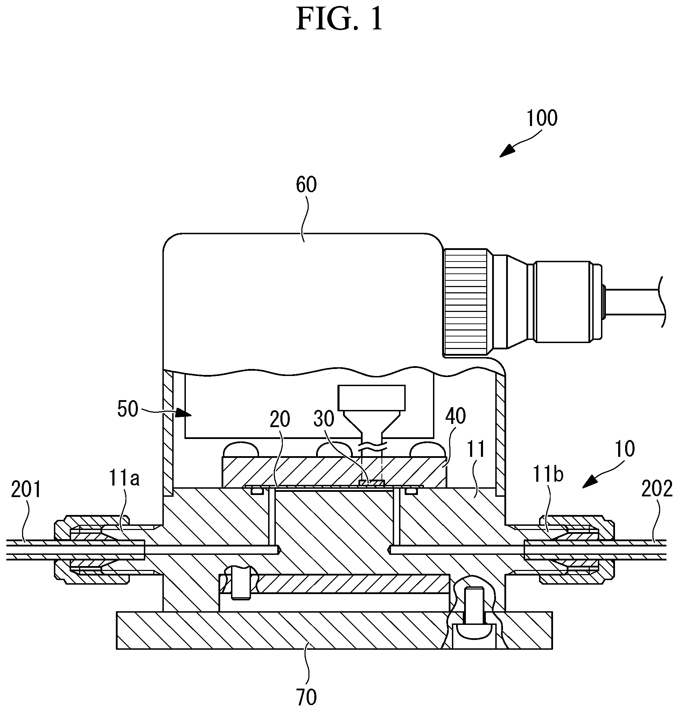

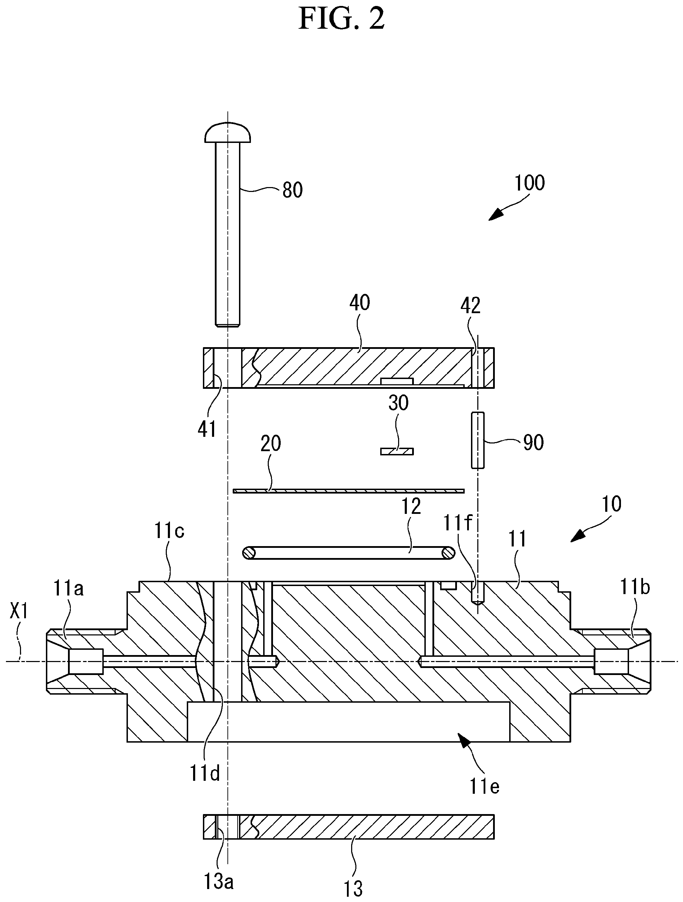

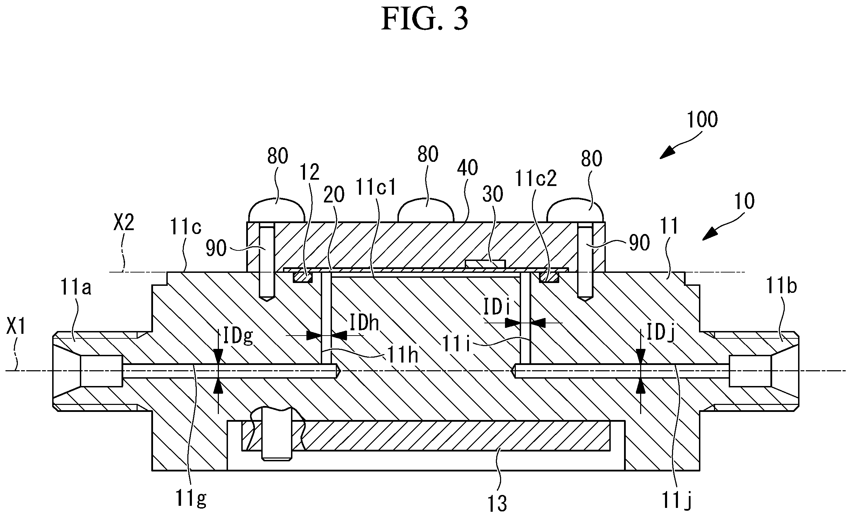

Fig. 1 is a partial longitudinal sectional view of the thermal type flowmeter 100 according to one embodiment of the present invention. Fig. 2 is an exploded view of the thermal type flowmeter 100 illustrated in Fig. 1. Fig. 3 is a sectional view of the thermal type flowmeter 100 illustrated in Fig. 1. As illustrated in Fig. 1 and Fig. 2, the thermal type flowmeter 100 of the present embodiment includes a channel unit 10, a plate member 20, a sensor unit 30, a sensor cover 40, a control substrate 50, an upper case 60, a bottom case 70, screws 80, and positioning pins 90.

The upper case 60 is a member serving as an upper casing of the thermal type flowmeter 100 and accommodates the control substrate 50 therein. The bottom case 70 is a member serving as a lower casing of the thermal type flowmeter 100 and attached to the channel unit 10. In Fig. 2 and Fig. 3, depiction of the upper case 60 and the bottom case 70 is omitted.

The channel unit 10 is a unit having a channel formed therein that causes a liquid flowing in from an inflow port 11a connected to an external pipe 201 to flow out of an outflow port 11b connected to an external pipe 202. The channel unit 10 has a channel member 11, an O-ring (annular seal member) 12, and a base 13.

As illustrated in Fig. 2 and Fig. 3, through holes 11d, a recess 11e, and positioning holes 11f are formed in the channel member 11. Internal threads 13a are formed in the base 13. Through holes 41 and positioning holes 42 are formed in the sensor cover 40. The screws 80 are inserted in the through holes 41 and the through holes 11d, fastened into the internal threads 13a of the base 13 arranged in the recess 11e, and thereby the channel unit 10 and the sensor cover 40 are coupled into one piece.

As illustrated in Fig. 3, once the channel unit 10 and the sensor cover 40 are coupled into one piece, the plate member 20 and the sensor unit 30 are arranged between the channel unit 10 and the sensor cover 40. The positioning pins 90 are inserted in both the positioning holes 11f and the positioning holes 42, and thereby the position of the sensor cover 40 on a flat surface 11c of the channel member 11 is fixed.

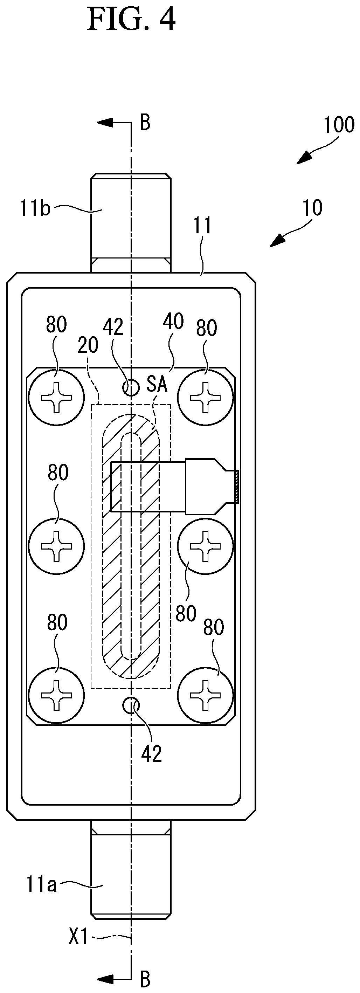

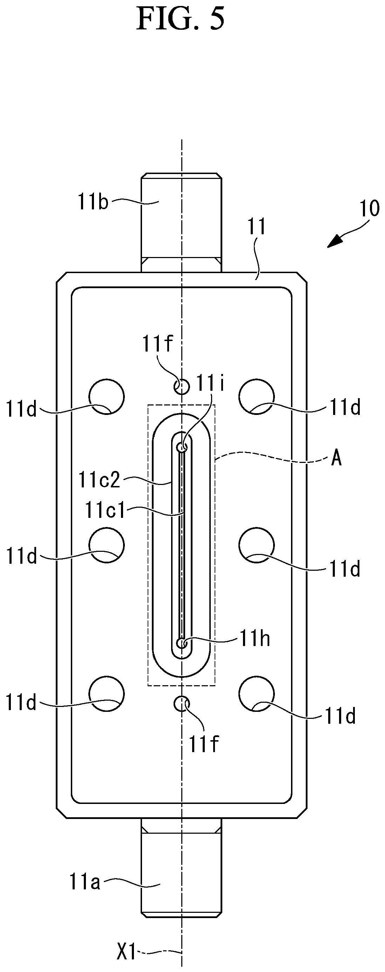

Fig. 4 is a plan view of the thermal type flowmeter 100 illustrated in Fig. 3. Fig. 5 is a plan view of the channel unit 10 illustrated in Fig. 4. As illustrated in Fig. 5, six through holes 11d are formed in the channel member 11. The screws 80 are inserted in six through holes 41 of the sensor cover 40 and the six through holes 11d of the channel member 11, respectively, and fastened into six internal threads 13a of the base 13.

The channel member 11 is a member that causes a liquid flowing in from the inflow port 11a to flow out of the outflow port 11b. The channel member 11 is formed of a resin material having high corrosion resistance (for example, a fluorine resin material such as polytetrafluoroethylene (PTFE)). As illustrated in Fig. 3, the flat surface 11c extending in the horizontal direction is formed above the channel member 11. The channel member 11 has a flat surface 11c, an introduction channel 11g, an inflow channel 11h, an outflow channel 11i, and a delivery channel 11j.

A first groove 11c1 and a second groove 11c2 are formed in the flat surface 11c. The first groove 11c1 is formed so as to extend straight along an axis X2 on the flat surface 11c. The flat surface 11c around the first groove 11c1 is sealed by the plate member 20, and thereby a measuring channel for measuring the flow rate of a liquid by the sensor unit 30 is formed.

As illustrated in Fig. 5, the second groove 11c2 extends annularly so as to surround the first groove 11c1. As illustrated in Fig. 3, the O-ring 12 is inserted in the second groove 11c2 and forms an annular seal area SA surrounding the first groove 11c1 (see Fig. 4).

As illustrated in Fig. 3, the introduction channel 11g is a straight channel extending in the horizontal direction along an axis X1 and having a circular cross section and has an inner diameter of IDg. The inflow channel 11h is a straight channel having a circular cross section to which a liquid flowing in from the inflow port 11a via an introduction channel 11g is guided and has an inner diameter of IDh (first inner diameter). The inner diameter IDh is smaller than the inner diameter IDg and is set to, for example, 0.3 mm or larger and 1.5 mm or smaller. The inner diameter IDh has the same size from one end connected to the introduction channel 11g to the other end connected to the first groove 11c1.

The outflow channel 11i is a straight channel having a circular cross section that guides a liquid to the outflow port 11b via the delivery channel 11j and has an inner diameter of IDi (second inner diameter). The inner diameter IDi may be the same as the inner diameter IDh. The inner diameter IDi has the same size from one end connected to the first groove 11c1 to the other end connected to the delivery channel 11j. The delivery channel 11j is a straight channel extending in the horizontal direction along the axis X1 and having a circular cross section and has an inner diameter of IDj. The inner diameter IDj is larger than the inner diameter IDi and is set to, for example, 0.3 mm or larger and 1.5 mm or smaller. The inner diameter IDj may be the same as the inner diameter IDg.

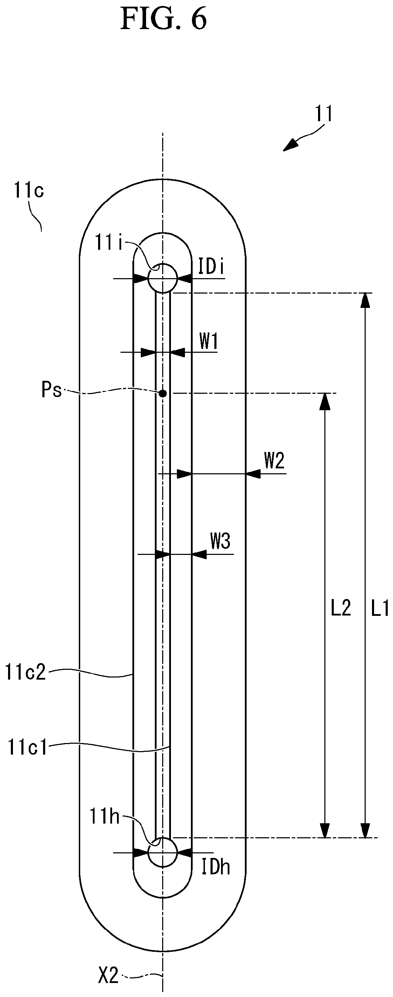

Fig. 6 is a partial enlarged view of the part A of the channel member 11 illustrated in Fig. 5. As illustrated in Fig. 6, the first groove 11c1 is formed in the flat surface 11c and extends straight along the axis X2. The inflow channel 11h is connected to one end in the axis direction along the axis X2 of the first groove 11c1. The outflow channel 11i is connected to the other end in the axis direction along the axis X2 of the first groove 11c1. The center of the inflow channel 11h and the center of the outflow channel 11i are on the axis X2, respectively, and match the center of the first groove 11c1.

As illustrated in Fig. 6, the inner diameter IDh at a position of the flat surface 11c at which the inflow channel 11h is opened and the inner diameter IDi at a position of the flat surface 11c at which the outflow channel 11i is opened are larger than the width W1 on the flat surface 11c in a direction orthogonal to the axis X2 of the first groove 11c1. The inner diameter IDh and the inner diameter IDi are preferably 1.5 times or greater and 3 times or less of the width W1 of the first groove 11c1.

When each of the inner diameter IDh and the inner diameter IDi is 1.5 times or greater of the width of the first groove 11c1, the inflow channel 11h can be suitably connected to one end of the first groove 11c1, or the outflow channel 11i can be reliably connected to the other end of the first groove 11c1, even when the centers of the inflow channel 11h and the outflow channel 11i are slightly shifted from the center of the first groove 11c1. Further, when each of the inner diameter IDh and the inner diameter IDi is 3 times or less of the width of the first groove 11c1, an excessively large difference between each channel sectional area of the inflow channel 11h and the outflow channel 11i and the channel sectional area of the first groove 11c1 can be avoided.

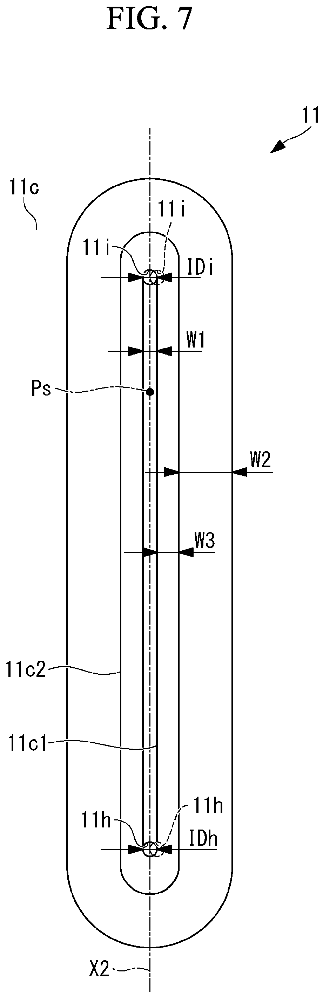

Fig. 7 is a partial enlarged view of the channel member 11 of a thermal type flowmeter of a comparative example. The channel member 11 of the thermal type flowmeter of the comparative example differs from the channel member 11 of Fig. 6 in that the inner diameter IDh and the inner diameter IDi are the same length as the width W1 of the first groove 11c1. In Fig. 7, the inflow channel 11h and the outflow channel 11i indicated by solid lines represent a state where the centers of the inflow channel 11h and the outflow channel 11i are matched to the center of the first groove 11c1.

On the other hand, in Fig. 7, the inflow channel 11h and the outflow channel 11i indicated by dotted lines represent a state where the centers of the inflow channel 11h and the outflow channel 11i are shifted by half the inner diameter IDh and by half the inner diameter IDi from the center of the first groove 11c1, respectively. As illustrated in Fig. 7, if the centers of the inflow channel 11h and the outflow channel 11i are shifted from the center of the first groove 11c1 due to machining accuracy of cutting machining (drilling machining), this will result in a state where the inflow channel 11h and the outflow channel 11i are not suitably connected to the ends of the first groove 11c1.

As illustrated in Fig. 6, in the channel member 11 of the present embodiment, the width W2 in the flat surface 11c in the direction orthogonal to the axis X2 of the second groove 11c2 is larger than the width W1. Further, the width W3 of the flat surface 11c between the first groove 11c1 and the second groove 11c2 is larger than W1 and smaller than W2. The width W1 in the direction orthogonal to the axis X2 of the first groove 11c1 is preferably 0.2 mm or greater and 1 mm or less.

As illustrated in Fig. 6, the length in the axis direction along the axis X2 from one end of the first groove 11c1 (the connecting position to the inflow channel 11h) to the other end of the first groove 11c1 (the connecting position to the outflow channel 11i) is L1. Further, the distance in the axis direction from one end of the first groove 11c1 to a measuring position Ps is L2. The measuring position Ps is the center position in the axis direction along the axis X2 of the sensor unit 30.

The length L2 is preferably longer than the half of the length L1. For example, the length L2 is preferably set to 0.6 times or greater and 0.9 times or less of the length L1. In such a way, the sensor unit 30 is preferably arranged at a position closer to the outflow channel 11i than to the inflow channel 11h in the axis direction. Because the sensor unit 30 is arranged at a position closer to the outflow channel 11i than to the inflow channel 11h, a liquid flowing from the inflow channel 11h into the first groove 11c1 is able to reach the measuring position Ps of the sensor unit 30 with disturbance or the like of the liquid being sufficiently reduced and the speed thereof being stabilized.

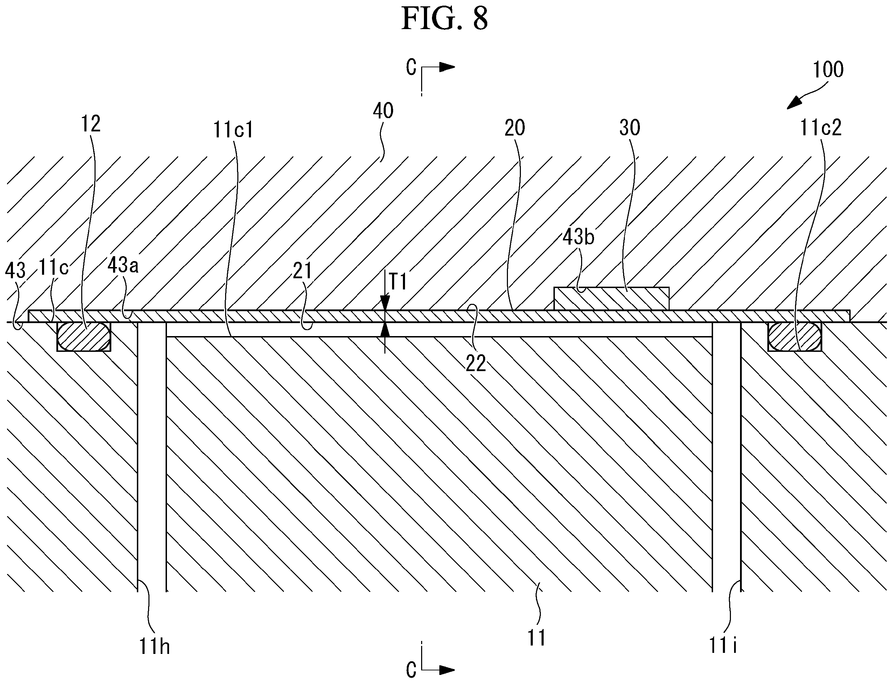

Fig. 8 is a sectional view taken along the arrow B-B of the thermal type flowmeter 100 illustrated in Fig. 4. As illustrated in Fig. 8, the plate member 20 is a member that is attached to the channel member 11 and defines a measuring channel used for measuring a flow rate of a liquid by the sensor unit 30 together with the first groove 11c1 of the channel member 11. The plate member 20 has a liquid contact surface 21 contacted with a liquid flowing through the flat surface 11c and the first groove 11c1 and a temperature detection surface 22 used for determining the temperature of a liquid transferred from the liquid contact surface 21 by the sensor unit 30.

The plate member 20 is formed of sapphire that is a material having high corrosion resistance against alkaline liquids. The plate member 20 may be formed of glassy carbon. It is preferable to form a film having a low gas permeability coefficient on the liquid contact surface 21 of the plate member 20 so that a corrosive gas does not permeate therethrough.

The plate member 20 is formed to have a constant thickness T1 at respective positions. For example, the thickness T1 is preferably set to 0.1 mm or greater and 0.4 mm or less. The plate member 20 is accommodated in a recess 43a formed in a contact surface 43 of the sensor cover 40.

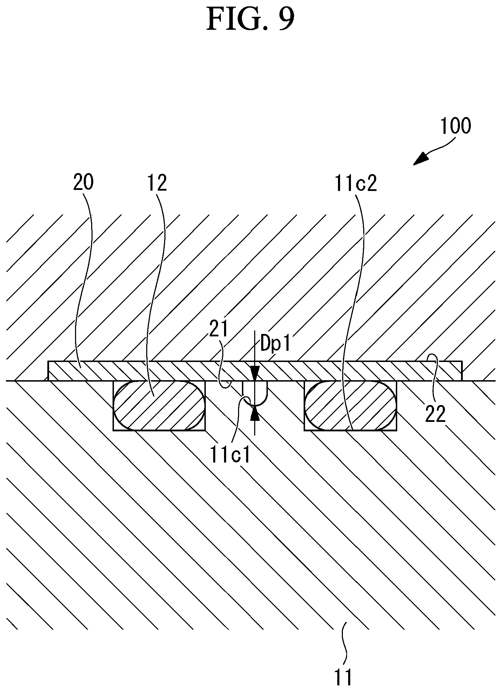

Fig. 9 is a sectional view taken along the arrow C-C of the thermal type flowmeter 100 illustrated in Fig. 8. As illustrated in Fig. 9, the first groove 11c1 formed in the channel member 11 has substantially a semi-circular cross section. The depth Dp1 from the liquid contact surface 21 of the plate member 20, which seals the first groove 11c1, to the bottom of the first groove 11c1 is larger than the width W1 of the first groove 11c1. The depth Dp1 is preferably 0.5 times to 2 times (preferably 1 time) of the width W1.

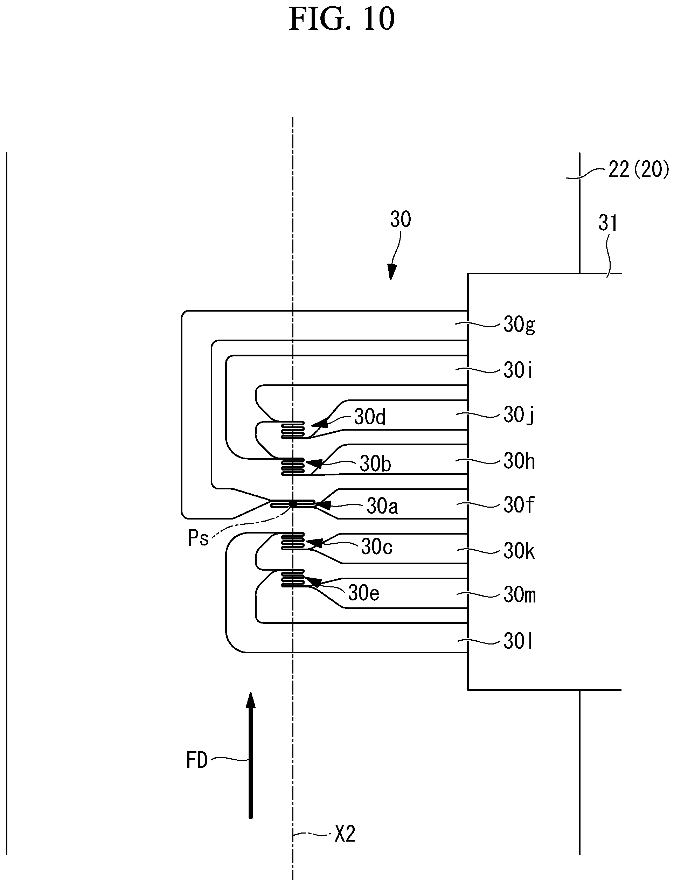

Fig. 10 is a plan view of the sensor unit 30 formed in the temperature detection surface 22 of the plate member 20. As illustrated in Fig. 10, the sensor unit 30 is a device that measures the flow rate of a liquid flowing through the measuring channel defined by the first groove 11c1 and the plate member 20 and transmits the measured flow rate to the control substrate 50. The sensor unit 30 has a heating resistor 30a that transfers heat to the plate member 20 and temperature detecting resistors 30b, 30c, 30d, 30e that determine the temperature of the plate member 20 to which the heat of the liquid flowing through the measuring channel is transferred.

The heating resistor 30a and the temperature detecting resistors 30b, 30c, 30d, 30e are each formed by depositing a film of a metal such as platinum on a glass substrate by a Chemical Vapor Deposition (CVD) method or the like. Other methods such as sputtering, photolithography, or the like may be used to form the heating resistor 30a and the temperature detecting resistors 30b, 30c, 30d, 30e on the temperature detection surface 22 of the plate member 20.

The sensor cover 40 is a member for accommodating the plate member 20 and the sensor unit 30 between the sensor cover 40 and the channel unit 10. As illustrated in Fig. 8, the sensor cover 40 has the contact surface 43. The contact surface 43 is a surface contacted with the flat surface 11c of the channel member 11 when the channel unit 10 and the sensor cover 40 are coupled into one piece by the screws 80. The recess 43a is formed in the flat surface 11c and has a depth that is the same as or slightly smaller than the thickness T1 of the plate member 20. The recess 43b is formed in the recess 43a and is a portion that accommodates the sensor unit 30.

The control substrate 50 is a device that transmits a voltage signal to the heating resistor 30a of the sensor unit 30 to heat the heating resistor 30a and calculates a flow rate of a liquid based on temperatures transmitted from the temperature detecting resistors 30b, 30c, 30d, 30e. The control substrate 50 outputs a voltage signal used for heating the heating resistor 30a to the sensor unit 30 via a flexible substrate 31. Further, the control substrate 50 outputs voltage signals used for determining the resistance values of the temperature detecting resistors 30b, 30c, 30d, 30e to the sensor unit 30 via the flexible substrate 31.

The control substrate 50 outputs a voltage signal to the heating resistor 30a so as to periodically repeat a heating period to heat the heating resistor 30a and a non-heating period not to heat the heating resistor 30a. The heating period is set to be shorter than the non-heating period. That is, the heating period is set to a ratio that is less than 0.5 with respect to one cycle that is a sum of one heating period and one non-heating period. The ratio with respect to one cycle of the heating period may be set to be less than 0.4.

The liquid flowing through a measuring channel flows along the axis X2 in the flow direction FD from below to above in Fig. 10. Thus, in response to instantaneous heating to the heating resistor 30a, the heated liquid flows along the axis X2, reaches the position of the temperature detecting resistor 30b, and then reaches the position of the temperature detecting resistor 30d. The control substrate 50 determines the electrical resistance values, which change with a temperature, of the temperature detecting resistor 30b and the temperature detecting resistor 30d and thereby measures the temperature of the plate member 20 near the temperature detecting resistor 30b and the temperature detecting resistor 30d.

The control substrate 50 can calculate the flow speed of a liquid flowing through the measuring channel from a timing of instantaneously heating the heating resistor 30a and a subsequent timing of the temperature detecting resistor 30b and the temperature detecting resistor 30d determining the temperature of the heated liquid. Further, the control substrate 50 can calculate a flow rate of the liquid from the calculated flow speed and the sectional area of the first groove 11c1.

In response to instantaneous heating of the heating resistor 30a, the heat transferred from the heating resistor 30a to the temperature detection surface 22 is transferred in the direction opposite to the flow direction FD of the liquid along the axis X2, reaches the position of the temperature detecting resistor 30c, and then reaches the position of the temperature detecting resistor 30e. The control substrate 50 determines the electrical resistance values, which change with a temperature, of the temperature detecting resistor 30c and the temperature detecting resistor 30e and thereby measures the temperatures of the temperature detecting resistor 30c and the temperature detecting resistor 30e.

The control substrate 50 subtracts the temperature of the temperature detecting resistor 30c from the temperature of the temperature detecting resistor 30b. The temperature determined by the temperature detecting resistor 30c upstream in the flow direction FD of the heating resistor 30a corresponds to the heat that is not transferred to the liquid and is transferred to the temperature detecting resistor 30c via the plate member 20 out of the heat transferred to the plate member 20 by the heating resistor 30a. The temperature detecting resistor 30b and the temperature detecting resistor 30c are arranged at the same distance from the heating resistor 30a.

Thus, by subtracting the temperature of the temperature detecting resistor 30c from the temperature of the temperature detecting resistor 30b, it is possible to measure the temperature of the liquid passing through the position of the temperature detecting resistor 30b. Similarly, the control substrate 50 subtracts the temperature of the temperature detecting resistor 30e from the temperature of the temperature detecting resistor 30d and thereby can measure the temperature of the liquid passing through the position of the temperature detecting resistor 30d.

As illustrated in Fig. 10, a wiring pattern 30f connected to one end of the heating resistor 30a and a wiring pattern 30g connected to the other end of the heating resistor 30a are formed on the temperature detection surface 22. Further, a wiring pattern 30h connected to one end of the temperature detecting resistor 30b, a wiring pattern 30i connected to the other end of the temperature detecting resistor 30b, and a wiring pattern 30j connected to one end of the temperature detecting resistor 30d are formed on the temperature detection surface 22. The other end of the temperature detecting resistor 30d is connected to the wiring pattern 30i.

Further, a wiring pattern 30k connected to one end of the temperature detecting resistor 30c, a wiring pattern 30l connected to the other end of the temperature detecting resistor 30c, and a wiring pattern 30m connected to one end of the temperature detecting resistor 30e are formed on the temperature detection surface 22. The other end of the temperature detecting resistor 30e is connected to the wiring pattern 30l. The wiring patterns 30f, 30g, 30h, 30i, 30j, 30k, 30l, 30m are each formed by depositing a film of a metal such as platinum on the glass substrate.

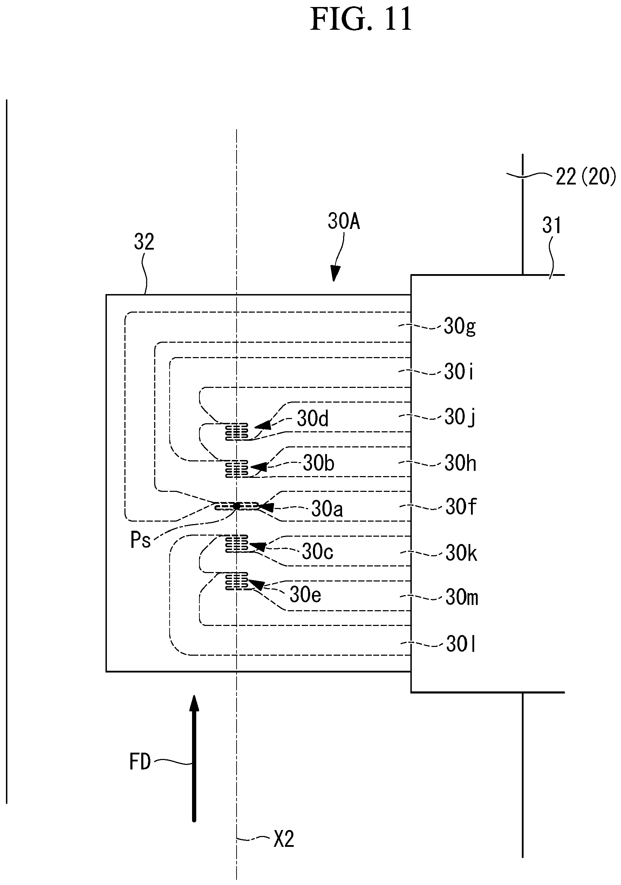

Although the sensor unit 30 illustrated in Fig. 10 is formed such that the heating resistor 30a and the temperature detecting resistors 30b, 30c, 30d, 30e are directly formed on the temperature detection surface 22 of the plate member 20, other forms may be employed. For example, as illustrated in Fig. 11, a form in which the sensor unit 30 formed on a glass substrate 32 is joined to the temperature detection surface 22 of the plate member 20 may be employed.

Fig. 11 is a plan view illustrating a state where a sensor unit 30A formed on the glass substrate 32 is joined to the temperature detection surface 22 of the plate member 20. The sensor unit 30A illustrated in Fig. 11 is formed by depositing the heating resistor 30a and the temperature detecting resistors 30b, 30c, 30d, 30e on one surface of the glass substrate 32. The surface of the glass substrate 32 having the heating resistor 30a and the temperature detecting resistors 30b, 30c, 30d, 30e formed therein is joined to the temperature detection surface 22 of the plate member 20 via an adhesive agent.

The sensor unit 30A illustrated in Fig. 11 is disadvantageous in terms of thermal conductivity and temperature detection response compared to the sensor unit 30 illustrated in Fig. 10, because an adhesive agent is interposed between the plate member 20 and the temperature detection surface 22. However, the sensor unit 30A illustrated in Fig. 11 has good productivity, because the heating resistor 30a and the temperature detecting resistors 30b, 30c, 30d, 30e are not directly formed on the plate member 20. For example, by employing the glass substrate 32 having sufficiently larger thickness and higher strength than the plate member 20, it is possible to prevent breakage from occurring when forming the heating resistor 30a and the temperature detecting resistors 30b, 30c, 30d, 30e.

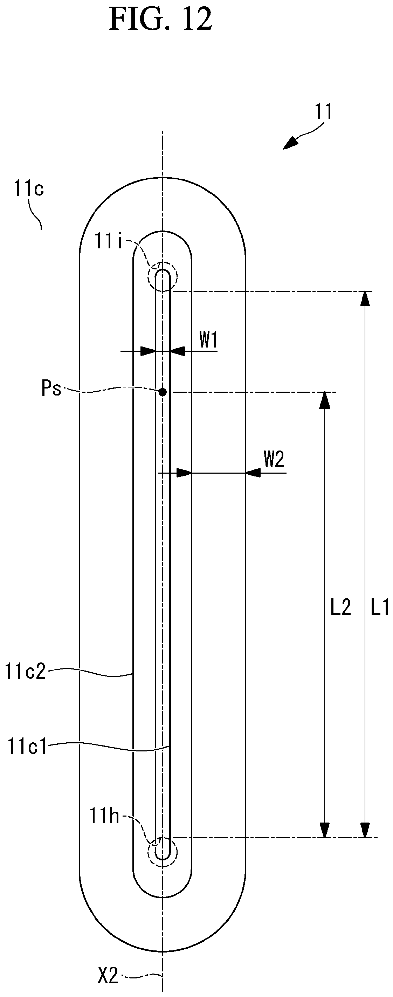

Next, the manufacturing method of the thermal type flowmeter 100 of the present embodiment will be described. Fig. 12 is a plan view illustrating a state where the first groove 11c1 and the second groove 11c2 are formed in the flat surface 11c of the channel member 11. In the manufacturing method of the present embodiment, the channel member 11 of the channel unit 10 is manufactured by the following procedure.

First, the flat surface 11c of the channel member 11 is cut to form the straight first groove 11c1 having the width W1 and the annular second groove 11c2 having the width W2. The first groove 11c1 and the second groove 11c2 are formed by milling using an endmill. The flat surface 11c of the channel member 11 having the first groove 11c1 and the second groove 11c2 formed therein is in a state illustrated in Fig. 12.

Next, the channel member 11 is cut to form the inflow channel 11h having a circular cross section so as to be connected to one end in the axis direction along the axis X2 of the first groove 11c1. The inflow channel 11h is formed by pushing a drill (not illustrated) in a direction orthogonal to the flat surface 11c against the position indicated by the dotted line in Fig. 12.

Next, the channel member 11 is cut to form the outflow channel 11i having a circular cross section so as to be connected to the other end in the axis direction along the axis X2 of the first groove 11c1. The outflow channel 11i is formed by pushing a drill (not illustrated) in a direction orthogonal to the flat surface 11c against the position indicated by the dotted line in Fig. 12. Note that the outflow channel 11i may be formed earlier than the inflow channel 11h.

Next, the channel member 11 is cut to form the introduction channel 11g and the delivery channel 11j having a circular cross section extending in the axis X1. The introduction channel 11g and the delivery channel 11j are formed by pushing a drill (not illustrated) against the side surface of the channel member 11 along the axis X1.

Next, the O-ring 12 is inserted in the second groove 11c2, and the plate member 20 accommodated in the recess 43a of the sensor cover 40 is attached to the flat surface 11c of the channel member 11 in contact therewith. When the liquid contact surface 21 of the plate member 20 is in contact with the flat surface 11c, the measuring channel through which a liquid flows is defined by the liquid contact surface 21 and the first groove 11c1.

Next, the screws 80 are inserted in the through holes 41 and the through holes 11d and fastened into the internal threads 13a of the base 13 arranged in the recess 11e to couple the channel unit 10 and the sensor cover 40 into one piece. Further, the upper case 60 accommodating the control substrate 50 is attached to the upper end of the channel member 11, and the bottom case 70 is attached to the lower end of the channel member 11. As discussed above, the thermal type flowmeter 100 of the present embodiment is manufactured.

Effects and advantages achieved by the thermal type flowmeter 100 of the present embodiment illustrated above will be described.

According to the thermal type flowmeter 100 of the present embodiment, since the channel member 11 having the first groove 11c1 formed therein that serves as a measuring channel used for measuring a liquid flow rate is made of a resin, it is possible to enhance corrosion resistance against alkaline liquids. Further, it is possible to measure a liquid flow rate by attaching the plate member 20 to the flat surface 11c of the channel member 11 having the first groove 11c1 formed therein and detecting heat transferred from the heating resistor 30a of the sensor unit 30 to the liquid via the plate member 20 as the temperature of the plate member 20 determined by the temperature detecting resistors 30b, 30c, 30d, 30e.

Further, each of the inner diameter IDh at a position of the flat surface 11c at which the inflow channel 11h is opened and the inner diameter IDi at a position of the flat surface 11c at which the outflow channel 11i is opened is larger than the width W1 of the first groove 11c1. Thus, even when the centers of the inflow channel 11h and the outflow channel 11i are slightly shifted from the center of the first groove 11c1, the inflow channel 11h is suitably connected to one end of the first groove 11c1, or the outflow channel 11i is suitably connected to the other end of the first groove 11c1. It is therefore possible to achieve easy formation of the first groove 11c1, the inflow channel 11h, and the outflow channel 11i in the channel member 11 and accurate measurement of a flow rate.

According to the thermal type flowmeter 100 of the present embodiment, because each of the inner diameter IDh and the inner diameter IDi is 1.5 times or greater of the width W1 of the first groove 11c1, the inflow channel 11h can be suitably connected to one end of the first groove 11c1, or the outflow channel 11i can be reliably connected to the other end of the first groove 11c1, even when the centers of the inflow channel 11h and the outflow channel 11i are slightly shifted from the center of the first groove 11c1.

According to the thermal type flowmeter 100 of the present embodiment, because the width W1 of the first groove 11c1 is 0.2 mm or greater and 1 mm or less, the reduced channel sectional area of the measuring channel can facilitate a liquid to be heated by the heating resistor 30a, and measuring accuracy of a liquid flow rate can be increased.

According to the thermal type flowmeter 100 of the present embodiment, since the plate member 20 is formed of sapphire or glassy carbon, the thermal type flowmeter 100 can achieve sufficient corrosion resistance against alkaline liquids or strong acids (hydrofluoric acid, sulfuric acid, or the like).

According to the thermal type flowmeter 100 of the present embodiment, since the sensor unit 30 is deposited on the plate member 20, the plate member 20 can be directly heated by the heating resistor 30a, and the temperature of the plate member 20 can be directly determined by the temperature detecting resistors 30b, 30c, 30d, 30e.

According to the thermal type flowmeter 100 of the present embodiment, since the O-ring 12 is inserted in the second groove 11c2 formed in the flat surface 11c and forms the annular seal area SA surrounding the first groove 11c1, it is possible to reliably prevent a liquid flowing through the measuring channel from leaking out of the seal area SA.

## Claims

1. A thermal type flowmeter (100) comprising:
a resin channel member (11) configured to cause a liquid flowing in from an inflow port to flow out of an outflow port;
a plate member (20) attached to the channel member (11) and defining, together with the channel member, a measuring channel used for measuring a flow rate of a liquid; and
a sensor unit (30) having a heating resistor and a temperature detecting resistor, the heating resistor being configured to transfer heat to the plate member (20), and the temperature detecting resistor being configured to determine a temperature of the plate member (20) to which heat of the liquid flowing through the measuring channel is transferred,
wherein the channel member (11) includes
a flat surface (11c) in which a first groove (11c1) having a predetermined width and extending straight along an axis is formed,
an inflow channel (11h) having a circular cross section, the inflow channel (11h) being connected to one end in an axis direction along the axis of the first groove (11c1), and a liquid flowing in from the inflow port being guided to the inflow channel (11h), the inflow channel (11h) being formed inside the channel member (11) by cutting the channel member (11), and
an outflow channel (11i) having a circular cross section, the outflow channel (11i) being connected to the other end in the axis direction of the first groove (11c1) and configured to guide a liquid to the outflow port, the outflow channel (11i) being formed inside the channel member (11) by cutting the channel member (11), and
wherein each of a first inner diameter (ID1) of a position of the flat surface (11c) at which the inflow channel (11h) is opened and a second inner diameter (ID2) of a position of the flat surface (11c) at which the outflow channel (11i) is opened is larger than a width of the first groove (11c1).

2. The thermal type flowmeter (100) according to claim 1, wherein each of the first inner diameter (ID1) and the second inner diameter (ID2) is 1.5 times or greater of the width of the first groove (11c1).

3. The thermal type flowmeter (100) according to claim 1 or 2, wherein the width of the first groove (11c1) is 0.2 mm or greater and 1 mm or less.

4. The thermal type flowmeter (100) according to claim 1 or 2, wherein the plate member (20) is formed of sapphire or glassy carbon.

5. The thermal type flowmeter (100) according to claim 1 or 2, wherein the sensor unit (30) is deposited on the plate member (20).

6. The thermal type flowmeter (100) according to claim 1 or 2, wherein a second groove (11c2) annularly extending so as to surround the first groove (11c1) is formed in the flat surface (11c),
the thermal type flowmeter (100) further comprising an annular seal member (12) inserted in the second groove (11c2) and contacted with the plate member to form an annular seal area (SA) surrounding the first groove (11c1).

7. The thermal type flowmeter (100) according to claim 1 or 2, wherein the sensor unit (30) is arranged at a position closer to the outflow channel than to the inflow channel in the axis direction.

8. A manufacturing method of a thermal type flowmeter (100), wherein the thermal type flowmeter (100) comprising
a resin channel member (11) configured to cause a liquid flowing in from an inflow port to flow out of an outflow port,
a plate member (20) attached to the channel member (11) and defining, together with the channel member (11), a measuring channel used for measuring a flow rate of a liquid, and
a sensor unit (30) having a heating resistor and a temperature detecting resistor, the heating resistor being configured to transfer heat to the plate member (20), and the temperature detecting resistor being configured to determine a temperature of the plate member (20) to which heat of the liquid flowing through the measuring channel is transferred,
the manufacturing method comprising:
cutting a flat surface (11c) of the channel member (11) to form a first groove (11c1) having a predetermined width and extending straight along an axis;
cutting the channel member (11) to form an inflow channel having a circular cross section inside the channel member (11), the inflow channel being connected to one end in an axis direction along the axis of the first groove (11c1), and a liquid flowing in from the inflow port being guided to the inflow channel;
cutting the channel member (11) to form an outflow channel having a circular cross section inside the channel member (11), the outflow channel being connected to the other end in axis direction of the first groove and configured to guide a liquid to the outflow port; and
forming the measuring channel by attaching the plate member (20) to the flat surface (11c) of the channel member (11) in which the first groove (11c1), the inflow channel, and the outflow channel are formed,
wherein each of a first inner diameter (ID1) of a position of the flat surface (11c) at which the inflow channel (1h) is opened and a second inner diameter (ID2) of a position of the flat surface (11c) at which the outflow channel (11i) is opened is larger than a width of the first groove (11c1).

## Patentansprüche

1. Thermischer Durchflussmesser (100), umfassend:
ein Harz-Kanalelement (11), das ausgebildet ist zum Bewirken des Ausströmens einer aus einer Einströmöffnung einströmenden Flüssigkeit aus einer Ausströmöffnung;
ein Plattenelement (20), das an dem Kanalelement (11) befestigt ist und zusammen mit dem Kanalelement einen Messkanal zum Messen der Durchflussmenge einer Flüssigkeit definiert; und
eine Sensoreinheit (30) mit einem Heizwiderstand und einem Temperaturerfassungswiderstand, wobei der Heizwiderstand dazu ausgebildet ist, Wärme auf das Plattenelement (20) zu übertragen, und wobei der Temperaturerfassungswiderstand dazu ausgebildet ist, eine Temperatur des Plattenelements (20) zu bestimmen, auf welches Wärme der durch den Messkanal strömenden Flüssigkeit übertragen wird,
wobei das Kanalelement (11) aufweist:
eine ebene Fläche (11c), in der eine erste Nut (11c1) ausgebildet ist, die eine vorgegebene Breite aufweist und geradlinig entlang einer Achse verläuft,
einen Einströmkanal (11h) mit einem kreisförmigen Querschnitt, wobei der Einströmkanal entlang der Achse mit in Achsrichtung einem Ende der ersten Nut (11c1) verbunden ist und eine Flüssigkeit, die aus der Einströmöffnung einströmt, zu dem Einströmkanal (11h) gleitet wird, wobei der Einströmkanal (11h) durch Schneiden des Kanalelements (11) in dem Kanalelement (11) ausgebildet ist, und
einen Ausströmkanal (11i) mit einem kreisförmigen Querschnitt, wobei der Ausströmkanal (11i) mit dem in Achsrichtung anderen Ende der ersten Nut (11c1) verbunden ist und dazu eingerichtet ist, eine Flüssigkeit zur Ausströmöffnung zu leiten, wobei der Ausströmkanal (11i) durch Schneiden des Kanalelements (11) in dem Kanalelement (11) ausgebildet ist und
wobei ein erster Innendurchmesser (ID1) einer Position der ebenen Fläche (11c), an der der Einströmkanal (11h) geöffnet ist, und ein zweiter Innendurchmesser (ID2) einer Position der ebenen Fläche (11c), an der der Ausströmkanal (11i) geöffnet ist, jeweils größer ist als eine Breite der ersten Nut (11c1).

2. Thermischer Durchflussmesser (100) gemäß Anspruch 1, wobei der erste Innendurchmesser (ID1) und der zweite Innendurchmesser (ID2) jeweils das 1,5-fache oder mehr als das 1,5-fache der Breite der ersten Nut (11c1) beträgt.

3. Thermischer Durchflussmesser (100) gemäß Anspruch 1 oder 2, wobei die Breite der ersten Nut (11c1) 0,2 mm oder mehr und 1 mm oder weniger beträgt.

4. Thermischer Durchflussmesser (100) nach Anspruch 1 oder 2, wobei das Plattenelement (20) aus Saphir oder Glaskohlenstoff gebildet ist.

5. Thermischer Durchflussmesser (100) nach Anspruch 1 oder 2, wobei die Sensoreinheit (30) auf dem Plattenelement (20) deponiert ist.

6. Thermischer Durchflussmesser (100) nach Anspruch 1 oder 2, wobei eine zweite Nut (11c2), die sich unter Umschließung der ersten Nut (11c1) ringförmig erstreckt, in der ebenen Fläche (11c) ausgebildet ist,
wobei der thermische Durchflussmesser (100) ferner ein Ringdichtungselement (12) umfasst, das in die zweite Nut (11c2) eingesetzt ist und an dem Plattenelement anliegt, um einen die erste Nut (11c1) umschließenden Ringdichtungsbereich (SA) zu bilden.

7. Thermischer Durchflussmesser (100) nach Anspruch 1 oder 2, wobei die Sensoreinheit (30) an einer Position angeordnet ist, die in der Achsrichtung näher am Ausströmkanal als am Einströmkanal liegt.

8. Verfahren zur Herstellung eines thermischen Durchflussmessers (100), wobei der thermische Durchflussmesser (100) umfasst:
ein Harz-Kanalelement (11), das ausgebildet ist zum Bewirken des Ausströmens einer aus einer Einströmöffnung einströmenden Flüssigkeit aus einer Ausströmöffnung;
ein Plattenelement (20), das an dem Kanalelement (11) befestigt ist und zusammen mit dem Kanalelement (11) einen Messkanal zum Messen der Durchflussmenge einer Flüssigkeit definiert; und
eine Sensoreinheit (30) mit einem Heizwiderstand und einem Temperaturerfassungswiderstand, wobei der Heizwiderstand dazu ausgebildet ist, Wärme auf das Plattenelement (20) zu übertragen, und wobei der Temperaturerfassungswiderstand dazu ausgebildet ist, eine Temperatur des Plattenelements (20) zu bestimmen, auf welches Wärme der durch den Messkanal strömenden Flüssigkeit übertragen wird,
das Herstellungsverfahren umfassend:
Schneidbearbeitung einer ebenen Fläche (11c) des Kanalelements (11) zum Bilden einer ersten Nut (11c1), die eine vorgegebene Breite aufweist und geradlinig entlang einer Achse verläuft;
Schneidbearbeitung des Kanalelements (11) zum Bilden eines Einströmkanals mit einem kreisförmigen Querschnitt in dem Kanalelement (11), wobei der Einströmkanal entlang der Achse mit in Achsrichtung einem Ende der ersten Nut (11c1) verbunden ist und eine Flüssigkeit, die aus der Einströmöffnung einströmt, zu dem Einströmkanal (11h) geleitet wird;
Schneidbearbeitung des Kanalelements (11) zum Bilden eines Ausströmkanals mit einem kreisförmigen Querschnitt in dem Kanalelement (11), wobei der Ausströmkanal mit dem in Achsrichtung anderen Ende der ersten Nut verbunden ist und dazu eingerichtet ist, eine Flüssigkeit zur Ausströmöffnung zu leiten; und
Bilden des Messkanals durch Anbringen des Plattenelements (20) an der ebenen Fläche (11c) des Kanalelements (11), in welchem die erste Nut (11ca), der Einströmkanal und der Ausströmkanal ausgebildet sind,
wobei ein erster Innendurchmesser (ID1) einer Position der ebenen Fläche (11c), an der der Einströmkanal (11h) geöffnet ist, und ein zweiter Innendurchmesser (ID2) einer Position der ebenen Fläche (11c), an der der Ausströmkanal (11i) geöffnet ist, jeweils größer ist als eine Breite der ersten Nut (11c1).

## Revendications

1. Débitmètre thermique (100) comprenant:
un élément de canal en résine (11) conçu pour provoquer l'écoulement d'un liquide entrant par une ouverture d'entrée vers une ouverture de sortie;
un élément de plaque (20) fixé à l'élément de canal (11) et définissant, conjointement avec l'élément de canal, un canal de mesure pour mesurer le débit d'un liquide; et
une unité de détection (30) comprenant une résistance chauffante et une résistance de détection de température, la résistance chauffante étant conçue pour transférer de la chaleur à l'élément de plaque (20) et la résistance de détection de température étant conçue pour déterminer une température de l'élément de plaque (20) auquel est transférée de la chaleur du liquide s'écoulant à travers le canal de mesure,
l'élément de canal (11) comprenant:
une surface plane (11c) dans laquelle est formée une première rainure (11c1) qui présente une largeur prédéterminée et s'étend en ligne droite le long d'un axe,
un canal d'entrée (11h) avec une section transversale circulaire, le canal d'entrée étant relié le long de l'axe dans le sens axial à une extrémité de la première rainure (11c1) et dans lequel un liquide s'écoulant depuis l'ouverture d'entrée est guidé vers le canal d'entrée (11h), le canal d'entrée (11h) étant formé dans l'élément de canal (11) par découpe de celui-ci, et
un canal de sortie (11i) avec une section transversale circulaire, le canal de sortie (11i) étant relié à l'autre extrémité de la première rainure (11c1) dans le sens axial et étant conçu pour conduire un liquide vers l'ouverture de sortie, le canal de sortie (11i) étant formé dans l'élément de canal (11) par découpe de l'élément de canal (11), et
un premier diamètre intérieur (ID1) d'une position de la surface plane (11c) au niveau de laquelle le canal d'entrée (11h) est ouvert et un deuxième diamètre intérieur (ID2) d'une position de la surface plane (11c) à laquelle le canal de sortie (11i) est ouvert étant chacun supérieurs à une largeur de la première rainure (11c1).

2. Débitmètre thermique (100) selon la revendication 1, dans lequel le premier diamètre intérieur (ID1) et le deuxième diamètre intérieur (ID2) sont chacun 1,5 fois ou plus la largeur de la première rainure (11c1).

3. Débitmètre thermique (100) selon la revendication 1 ou 2, dans lequel la largeur de la première rainure (11c1) est de 0,2 mm ou plus et de 1 mm ou moins.

4. Débitmètre thermique (100) selon la revendication 1 ou 2, dans lequel l'élément de plaque (20) est formé de saphir ou de carbone vitreux.

5. Débitmètre thermique (100) selon la revendication 1 ou 2, dans lequel l'unité de capteur (30) est déposée sur l'élément de plaque (20).

6. Débitmètre thermique (100) selon la revendication 1 ou 2, dans lequel une deuxième rainure (11c2) s'étendant de manière annulaire en entourant la première rainure (11c1) est formée dans la surface plane (11c),
le débitmètre thermique (100) comprenant en outre un élément d'étanchéité annulaire (12) inséré dans la deuxième rainure (11c2) et s'appuyant contre l'élément de plaque afin de former une zone d'étanchéité annulaire (SA) entourant la première rainure (11c1).

7. Débitmètre thermique (100) selon la revendication 1 ou 2, dans lequel l'unité de détection (30) est disposée à une position qui est plus proche du canal de sortie que du canal d'entrée dans la direction axiale.

8. Procédé de fabrication d'un débitmètre thermique (100), le débitmètre thermique (100) comprenant:
un élément de canal en résine (11) conçu pour provoquer l'écoulement d'un liquide entrant par une ouverture d'entrée vers une ouverture de sortie;
un élément de plaque (20) fixé à l'élément de canal (11) et définissant, conjointement avec l'élément de canal (11), un canal de mesure pour mesurer le débit d'un fluide; et
une unité de capteur (30) comprenant une résistance chauffante et une résistance de détection de température, la résistance chauffante étant conçue pour transférer de la chaleur à l'élément de plaque (20) et la résistance de détection de température étant conçue pour déterminer une température de l'élément de plaque (20) auquel est transférée de la chaleur du liquide s'écoulant à travers le canal de mesure,
le procédé de fabrication comprenant:
l'usinage par coupe d'une surface plane (11c) de l'élément de canal (11) pour former une première rainure (11c1) qui présente une largeur prédéterminée et s'étend en ligne droite le long d'un axe;
l'usinage de l'élément de canal (11) pour former un canal d'entrée ayant une section transversale circulaire dans l'élément de canal (11), le canal d'entrée étant relié le long de l'axe dans la direction axiale à une extrémité de la première rainure (11c1) et un liquide s'écoulant depuis l'ouverture d'entrée étant dirigé vers le canal d'entrée (11h);
l'usinage par découpe de l'élément de canal (11) pour former un canal de sortie avec une section transversale circulaire dans l'élément de canal (11), le canal de sortie étant relié à l'autre extrémité de la première rainure dans la direction axiale et étant conçu pour diriger un liquide vers l'ouverture de sortie; et
formation du canal de mesure par fixation de l'élément de plaque (20) sur la surface plane (11c) de l'élément de canal (11) dans lequel sont formés la première rainure (11ca), le canal d'entrée et le canal de sortie,
un premier diamètre intérieur (ID1) d'une position de la surface plane (11c) à laquelle le canal d'entrée (11h) est ouvert et un deuxième diamètre intérieur (ID2) d'une position de la surface plane (11c) à laquelle le canal de sortie (11i) est ouvert étant chacun plus grands qu'une largeur de la première rainure (11c1).
